**Europäisches Patentamt**

**European Patent Office**

**Office européen des brevets**

(11) Publication number: **0 450 700 A1**

## EUROPEAN PATENT APPLICATION

(21) Application number: 91200668.1

(22) Date of filing: 26.03.91

(51) Int. Cl.⁵: **B01L 1/00**, B25J 21/02

(30) Priority: 04.04.90 NL 9000788

(43) Date of publication of application:
09.10.91 Bulletin 91/41

(84) Designated Contracting States:
AT BE CH DE DK ES FR GB GR IT LI LU NL SE

(71) Applicant: **B.V. CLEAN AIR TECHNIEK**
Kuipersweg 37
NL-3449 JA Woerden(NL)

(72) Inventor: **Bianchetti, Rudi**
Prof. Bronkhorstlaan 44
NL-3451 ET Vleuten(NL)

(74) Representative: de Wit, Gerard Frederik, Ir. et al
Octrooi- en Merkenbureau De Wit B.V.
Breitnerlaan 146
NL-2596 HG Den Haag(NL)

(54) Port system for connecting dustpoor and/or sterile spaces with each other.

(57) The invention relates to a port system for the sterilization of materials and/or objects in a container (1), which is provided with a first port (2) and a first shut-off member (3) and the passing thereof to a sterile space provided with a second port (4) and a second shut-off member (6), wherewith the respective ports (2,4) and the shut-off members (3,6) are destined to cooperate with each other. Herewith means are provided to create a reduced pressure between the abutting shut-off members (3,6), so that in a simple manner the two shut-off members (3,6) are coupled to each other.

The invention relates to a port system for the sterilization of materials and/or objects in a container, which is provided with a first port and a first shut-off member and the passing thereof to a sterile space, provided with a second port and a second shut-off member, wherewith the respective ports and shut-off members are destined to cooperate with each other.

A suchlike system is used to bring materials and objects in and out shut-off dustpoor and/or sterile spaces, used in biology and medical sciences and in the pharmaceutical industry, by means of a container connectable to the shut-off space.

The various actions to be carried out within this shut-off space, also called isolator, for example with the conduct of medical research or also with production activities in the pharmaceutical industry, such as the filling of ampoules, are done without that herewith from outside contaminations can be taken inside, such as dust particles or bacteria. Thereto the actions are carried out with the use of long flexible gloves, protruding into the isolator, which are connected airtight thereto and where the whole arm can be put into or even better with a flexible suit of synthetic material, which fits the whole upper body and provided with a separate air supply and air exhaust device for the laboratory worker. Of course with a suchlike suit the laboratory worker has the greatest freedom of movement.

Besides that in this manner contaminations from outside are prevented, it is also prevented that one comes into contact with that which is inside the isolator, for instance dangerous pharmaceutics.

With the known system the container has a round shut-off member, which fits with a bayonet catch to the port, wherewith also the port is provided with a bayonet catch.

The port in the isolator, to which the container fits, also has a round shut-off member with a bayonet catch and a bayonet catch in the port. Now the container is coupled to the isolator by abutting the two shut-off members against each other and turning them with respect to each other, that is to say turning the container with respect to the isolator, connecting the container and the isolator as well as the shut-off members to each other with a bayonet catch too.

Removal of the two shut-off members connected to each other, is done from inside the isolator by turning the shut-off member of the isolator out of the bayonet catch, taking therewith the shut-off member of the container and turning it out of its fitting, whereafter the two connected shut-off members are taken into the isolator and leaving the isolator accessible.

The disadvantage of this known system is that when coupling of the shut-off members the container has to be turned through an angle, so that the contents may shift or even may be turned over, which in most cases will mean that the container has to be made dustfree or sterilized anew and subsequently has to be loaded again.

A great force is exerted on the packing material mounted near the bayonet catches in order to ensure a tight seal, which is accomplished by turning the port and/or shut-off member with respect to the gasket, so that it suffers a greater wear and wherewith more dust particles enter the container and isolator then would be the case when shut-off member and port are clamped to each other without turning.

A further disadvantage is, that the friction in the bayonet catches is so great, that the turning of the shut-off members requires a lot of force. To turn out both shut-off members at the same time from the isolator, handling means have to be provided.

The aim of the invention is to overcome these disadvantages. Accordingly the invention provides means to create a reduced pressure between the abutting shut-off members. Herewith in a very simple manner a coupling between both the shut-off members can be attained.

Because the outside of the shut-off member of the container, before it is connected to the isolator, has been in contact with an environment which is not dustpoor and/or sterile, this side of the shut-off member must be guarded totally before it is taken together with the shut-off member of the isolator port into the isolator.

To this end a gasket is mounted between the two shut-off members along the circumference. Although the space between the two shut-off members may be almost zero in order to create a reduced pressure, it is preferred to provide that at least one of the shut-off members has a cavity surrounded by a circumferential rim at the side which is bound to abut against the other shut-off member, so that the rim of the shut-off member of the container will abut for certain the total surface, guarding therewith the total surface of the shut-off member.

To make a good seal possible between the separate shut-off members and ports, wherewith the shut-off members can also be taken together into the isolator, according to the invention it is provided that the first shut-off member abuts against an oblique edge of the first port, in cross-section partially conical shaped to the inside, and the second shut-off member abuts against an oblique edge of the second port, in cross-section partially conical shaped to the outside. Herewith according to the invention it is also provided, that a gasket is fitted to the first port, which extends from the abutting surface with the second port up to and including the oblique abutting surface with the first shut-off member and a gasket is fitted to the second shut-off member, which extends from the abutting surface with the first shut-off member up to and including the oblique abutting surface with the second port.

In consequence of this the abutting surface of the shut-off member of the container with the shut-off member of the isolator lies in one plane with the abutting surface of the port of the isolator with the port of the container. Because the largest diameter of the shut-off member of the container almost equals the smallest diameter of the port of the isolator, the gaskets and the shut-off member of the container and the port of the isolator seen in cross-section, meet in one point, so that with the removal of the connected shut-off members no or almost no contamination of the isolator can occur.

The shut-off member of the container has to be clamped and hold in the port of the container as long as it does not yet abut on the port of the container, wherewith the means used to that end may not hamper the coupling of container and isolator and also a direct connection between the space within the container with the environment has to be prevented.

To achieve this aim it is provided according to the invention, that with at least one system of port and shut-off member a pneumatic seal and hold member is mounted between the port and the shut-off member.

According to a further embodiment of the invention it is provided, that the shut-off member of the isolator is clamped against the port with a clamping member operatable from the outside.

The connection between the sterile spaces is attained by coupling the container, which previously is sterilized in an autoclave or with chemicals or by putting it into an air filter system with very fine filter elements, to the isolator, whereafter from within the isolator a reduced pressure can be created between the shut-off members in order to couple them. After the pressure has been taken off from the pneumatic member and after the clamping member of the shut-off member of the isolator is put out of action, the coupled shut-off members can be taken into the isolator.

So the invention provides a coupling system, wherewith in an easy manner the shut-off members can be coupled with each other, without turning them in relation to each other and wherewith also the shut-off members of the sterile spaces can be fastened by respectively a pneumatic member and a clamping member, operatable from inside.

The great advantage is that now the shifting and dropping over of the contents of the container is prevented and further that the operation of the coupling system according the invention is easy and needs little manual effort in comparison with the known system with bayonet catches.

A further advantage is, that the wear of the gaskets is very much less than with the bayonet catches, which results in a much smaller number of dust particles originated from the gaskets.

In contrast with the known system one is also not tied to round ports with the coupling system according to the invention, but for example rectangular ports with rounded corners can also be used, making the space of the container easier accessible.

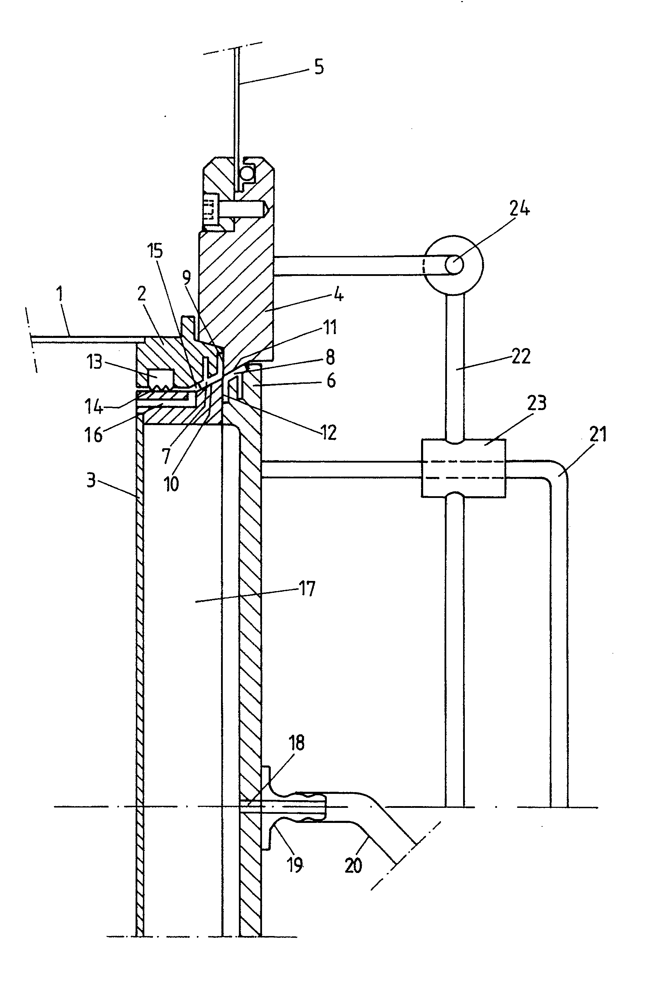

The invention is further elucidated in the following with the help of the drawing.

In the drawing the container is indicated with 1 provided at one side with a port 2, which is shut-off with a shut-off member 3.

The port 2 abuts on the port 4 of the closed space or isolator 5 and is hold in that position by fastening members,not further indicated, which for example may be quick-acting clamps mounted to the isolator or to the port of the isolator.

Herewith the shut-off member 3 abuts on the shut-off member 6 of the port 4.

Between the ports 2,4 and the shut-off members gaskets are mounted, wherewith the gasket 7 extends over the abutting surface 9 with the port 4 and the abutting surface 10 with the shut-off member 3 and the gasket 8 extends over the abutting surface 11 with the port 4 and the abutting surface 12 with the shut-off member 3 of the container 1. The gaskets 7,8 are connected detachable with respectively the port 2 of the container 1 and the shut-off member 6 of the isolator 5.

In order to withstand the temperatures in the autoclave during the sterilization, the gaskets are made for example of silicone rubber.

In the port 2 of the container 1 a pneumatic seal and hold member is mounted, which is inflated after the load and the shut-off member are brought into, to hold the shut-off member, which is placed in the port against the gasket 7. Hereafter container, shut-off member and load can be sterilized or desinfected.

In order to obtain a good clamping and sealing the surface of the pneumatic member 13, which abuts on the shut-off member, may be provided with ribs 14.

In principle such a pneumatic member can also be used to hold the shut-off member 6 against the port 4, but because the port 4 and the shut-off member 6 can be reached from the inside of the isolator 5, here without any objection a mechanical clamping system with for example quick-acting clamps can be used.

To be able to sterilzie the space bounded by the pneumatic member 13, the port 3, the gasket 7 and the shut-off member 3, bores 16 are made in the shut-off member 3, of which one can be seen in the drawing.

The operation of the port system is as follows. A sterilized, loaded and sealed container 1 is placed with its port 2 and the shut-off member 3 against the port 4 and the shut-off member 6 of the isolator 5 and is fastened with clamping means not further shown.

Herewith the abutting surfaces 9 and 12 are almost located in one plane, wherewith the diameter of the port 4 of the isolator is just large enough to let pass through here the shut-off member 3 of the container. In this manner the port 2 of the container 1 with the gasket 7 abuts with its inner boundary against the port 4 of the isolator 5 and the shut-off member 3 with its outer boundary against the gasket 8 of the shut-off member 6 of the isolator 5, so that the whole outer surface of the port 2 and the shut-off member 3, which for certain is contaminated during the transport of the container to the isolator, and the whole outer surface of the shut-off member 6 are guarded from the inner spaces of the isolator 5 and the container 1, with bringing the coupled shut-off members 3 and 6 into the isolator.

The shut-off members 3 and 6 are coupled by providing a reduced pressure in the space there between. Although a very small space will suffice the construction of the shut-off members with raised edges for greater rigidity and in the case of the shut-off member to provide a contact possibility for the pneumatic seal and hold member 13, gives a space 17, formed by both shut-off members. By this edge construction a good joining of the shut-off member 3 is ensured to the gasket 8 along the total circumference.

In the space 17 a reduced pressure is created by means of a vacuum pump, not further shown, which is connected via bore 18 in the shut-off member 6 of the isolator, connecting nipple 19 and flexible hose 20 with the space 17. The air, that is pumped from between the two shut-off members is of course taken outside the isolator.

After the reduced pressure is created in the space 17 and after the pressure is taken off from the pneumatic member 13, the two shut-off members 3 and 6 can be taken together out of their respective ports 2,4 and into the isolator 5.

Directly after fastening the container 1 to the isolator 5 with clamping members, the pressure can be taken off from the pneumatic member, which is also handled from outside. Because the container 1 and the isolator 5 are clamped tightly to each other, directly after clamping the pressure can be taken off from the pneumatic member 13, even before a reduced pressure is created in the space 17.

The shut-off members 3,6 can be made of a light-weight material such as for example polypropylene, as a result of which also taking the two coupled shut-off members inside the isolator progresses easily.

If the shut-off members are made of stainless steel, then to increase the operation comfort a guiding system can be provided, that consist for example of a bow 21 connected to the shut-off member 6, which has guide sleeves 23 connected to a rod 22, wherewith the coupled shut-off members can be taken out of the respective ports 2 and 4. The system can be constructed in such a way, that the shut-off members with the rod 22 pivot away via pivot point 24 or that the shut-off members are slide aside with a sufficient long extension of the rod 22 and with guide sleeves slidably mounted over the rod 22.

With taking objects out of the isolator 5, these are placed in the container 1, whereafter the still coupled shut-off members are replaced in their respective ports 2 and 4. Then the shut-off member 6 is fastened with clamping members, with which the container is shut-off from the isolator. The space between the shut-off members then may be brought back to normal pressure.

Before the container 1 is disconnected from the isolator 5, first the pneumatic seal and hold member 13 has to be put under pressure, so that the shut-off member is hold and taken with the container. The objects brought into the container herewith still remain in a sterile space.

## Claims

1. Port system for the sterilization of materials and/or objects in a container (1), which is provided with a first port (2) and a first shut-off member (3) and the passing thereof to a sterile space, provided with a second port (4) and a second shut-off member (6), wherewith the respective ports (2,4) and shut-off members (3,6) are destined to cooperate with each other, characterized in that means are provided to create a reduced pressure between the abutting shut-off members (3,6).

2. Port system according to claim 1, characterized in that at least one of the shut-off members (3,6) at the side, which is bound to abut against the other shut-off member, has a cavity, surrounded by a circumferential rim.

3. Port system according to claim 1 or 2, characterized in that the first shut-off member (3) abuts against an oblique edge of the first port (2), in cross-section partially conical shaped to the inside, and the second shut-off member (6) abuts against an oblique edge of the second port (4), in cross-section partially conical shaped to the outside.

4. Port system according to claim 3, characterized in that a gasket (7) is fitted to the first port (2), which extends from the abutting surface with the second port (4) up to and including the oblique abutting surface (10) with the first shut-off member (3) and a gasket (8) is fitted to the second shut-off member (6), which extends from the abutting surface with the first shut-off member (3) up to and including the oblique abutting surface (11) with the second port (4).

5. Port system according to claim 4, characterized in that the abutting surfaces (9,12) bounded by the gaskets between the ports and the shut-off members respectively, are lying in a plane.

6. Port system according to one of the preceding claims, characterized in that with at least one system of port (3,6) and shut-off member (2,4) a pneumatic seal and hold member (13) is mounted between the port (3,6) and the shut-off member (2,4).

7. Port system according to claim 6, characterized in that at least one bore (16) is made, which connects the space formed between the pneumatic seal and hold member (13), the port (3,6), the shut-off member (2,4) and the gasket (7,8), with the sterile space.

8. Port system according to claim 7, characterized in that one or more of the bores (16) are made in the shut-off member (3,6).

9. Container (1) provided with a port (2) and a shut-off member (3), which may be part of the port system according to claims 1-8, characterized in that a seal and hold member (13) is mounted between the port (2) and the shut-off member (3).

10. Container (1) according to claim 9, characterized in that in cross-section the port (2) is partially conical shaped to the inside.

11. Shut-off space provided with a port (4) with shut-off member (6), which may be part of the port system according to claims 1-8, characterized in that a bore (18) is made in the shut-off member (6), whereto flexible connecting means (20) are connected, connecting the space (17) between the abutting shut-off members (3,6) with means to create a reduced pressure in this space.

12. Shut-off space according to claim 11, characterized in that clamping members are mounted to the outside, wherewith the port (2) of the container (1) can be clamped against the port (4) of the casing (5).

13. Shut-off space according to claim 11 or 12, characterized in that at the inside guiding and clamping members (21-24) for the shut-off member (6) are mounted.

## European Patent Office

**EUROPEAN SEARCH REPORT**

Application Number

**EP 91 20 0668**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 111 753 (M.H. FOLSOM et al.)<br>* Column 3, line 26 - column 7, line 67; figures 1-8 *<br>– – – | 1 | B 01 L 1/00<br>B 25 J 21/02 |
| A | GB-A-2 102 719 (U.K. ATOMIC ENERGY AUTHORITY)<br>* Page 1, line 64 - page 5, line 5; figures 1-8 *<br>– – – – – | 1 | |

**TECHNICAL FIELDS SEARCHED (Int. Cl.5)**

B 01 L 1/00
A 61 L 2/00
B 01 J 3/00
B 25 J 21/00

The present search report has been drawn up for all claims

| Place of search | Date of completion of search | Examiner |
|---|---|---|
| The Hague | 10 June 91 | SARNEEL A.P.T. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document